# EUROPEAN PATENT APPLICATION

(11) **EP 4 811 679 A1**
(43) Date of publication of application: **23.09.2026**
(21) Application number: 25164078.5
(22) Date of filing: 17.03.2025
(51) Int. Cl.: H04B 10/07

(54) **NETWORK QUALITY INDICATOR**

(71) Applicant: British Telecommunications Public Limited Company, London E1 8EE (GB)
(72) Inventor: CAIRANO-GILFEDDER, Carla, London, E1 8EE (GB); TULLIN, John, London, E1 8EE (GB); SMITH, Sam, London, E1 8EE (GB)
(74) Representative: British Telecommunications public limited company Intellectual Property Department

(57) **Abstract**

A method of determining a network quality indicator for an optical distribution network is described. The method comprises estimating an expected power level between two points of the optical distribution network, the expected power level being estimated based on respective assumed attenuation associated with intervening optical components between the two points, on an optical path ranging length, and on a power level variance allowance. In this way, an accurate estimation of what the power level between two points should be can be ascertained, taking account knowledge of the actual physical infrastructure and real-world experience of attenuation.

## Description

The present disclosure relates to a network quality indicator, and in particular to a method and apparatus for determining such an indicator for an optical line of an optical distribution network. Some embodiments herein relate to how the network quality indicator is used in various contexts such as line installation, maintenance, fault finding, and the modelling of a digital twin for an optical distribution network.

### BACKGROUND

When commissioning optical telecommunication circuits such as Fibre-to-the-Premises (FTTP) or Ethernet, a single arbitrary system limit is typically used in determining whether the circuit is within optical transmission power limits and can support the respective technology and corresponding service.

Whilst this approach provides certainty that the circuit will either work or not, it is recognised that a higher-than-expected Optical Distribution Network (ODN) loss can still be present resulting in a lower-than-expected power level and indicating a high-loss event on the optical path.

High-loss events have the potential to cause a poor service performance, reduce longevity of service, increase the meantime between repair, require multiple network interventions and make for a higher propensity of future failure.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a method of determining a network quality indicator for an optical distribution network, comprising:
estimating an expected power level between two points of the optical distribution network, the expected power level being estimated based on respective assumed optical attenuation associated with intervening optical components between the two points, on an optical path ranging length, and on a power level variance allowance.

In this way, an accurate estimation of what the power level between two points should be can be ascertained, taking account knowledge of the actual physical infrastructure and real-world experience of optical attenuation.

One of the two points may be an optical network termination device and the other of the two points may be an optical line terminal. The optical path ranging length between the optical line terminal and the optical network termination device may be determined and reported by the optical network termination device.

The expected power level may be further based on an assumed launch power at the optical line terminal.

The power level variance allowance may be a percentage allowance (percentage uplift on each of the other attenuations assumed for the intervening components and/or the path length) added to the assumed power level.

The power level variance allowance may be applied as a fixed percentage of the attenuation assumed for each of the intervening components and/or for the path length.

The assumed attenuation for at least some of the intervening components may be age dependent. That is, some components degrade in performance over time. The rate of degradation may be assumed the same for all components, or different components may be assumed to degrade at different rates, or by different amounts.

The method may comprise maintaining a database of assumed attenuation of optical components, and accessing the database to obtain the assumed attenuation of optical components determined to intervene on the optical distribution network.

According to a second aspect there is a method of testing an optical line, comprising:
determining the network quality indicator for the optical line using a method according to the above;
measuring an actual power level for the new optical line; and
comparing the expected power level indicated by the network quality indicator with the measured power level.

According to a third aspect there is a method of installing a new optical line, comprising:
testing the new optical line using the method above; and
determining whether the installed line is providing an acceptable network quality in dependence on the comparison, wherein the installed line is determined to provide an acceptable network quality when the measured power level is within a threshold range of the expected power level.

The method may comprise defining a baseline performance certificate for the optical line based on the network quality indicator, and storing the baseline performance certificate.

According to a fourth aspect there is a method of maintaining an optical line, comprising:
testing the new optical line using the above testing method; and
diagnosing a fault on the optical line based on the comparison.

According to a fifth aspect there is a method of detecting faults on an optical distribution network, comprising:
testing a plurality of optical lines using the above testing method;
identifying which optical lines are experiencing an actual power level beyond a threshold difference from the expected power level; and
localising a fault by determining components common to the identified optical lines.

According to a sixth aspect there is a method of modelling an optical distribution network using a digital twin, comprising modelling the attenuation of optical components within the network using the network quality indicator obtained using the above method.

According to a seventh aspect there is a system for determining a network quality indicator for an optical line between two points on an optical distribution network, comprising:
an apparatus for measuring an optical path ranging length for the optical line; and
an apparatus for estimating an expected power level between the two points of the optical distribution network based on respective assumed attenuation associated with intervening optical components between the two points, on the measured optical path ranging length, and on a power level variance allowance.

In the manner above, the present technique introduces a network quality indicator expected power level (EPL) which is calculated between two points of an optical network and which may be used in multiple functions to improve network provision quality, service assurance, and capacity planning, including software-defined network instantiations.

The EPL may be used for example as a maximum target level at an optical line new provision (e.g. FTTP), or as an indicator of network quality for in-life maintenance functions such as fault diagnostics, service assurance, and capacity planning.

The EPL may be calculated by adding the following elements:
Launch power level at the Optical Line terminal (OLT);
Attenuation from intervening Optical Distribution Network (ODN) elements dependent on network architecture and on the optical path ranging length;
Power level variance allowance.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a data processing system for implementing the present technique;
FIG. 2 shows an optical line comprising a set of optical components; and
FIG. 3 is a schematic flow diagram illustrating the method.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

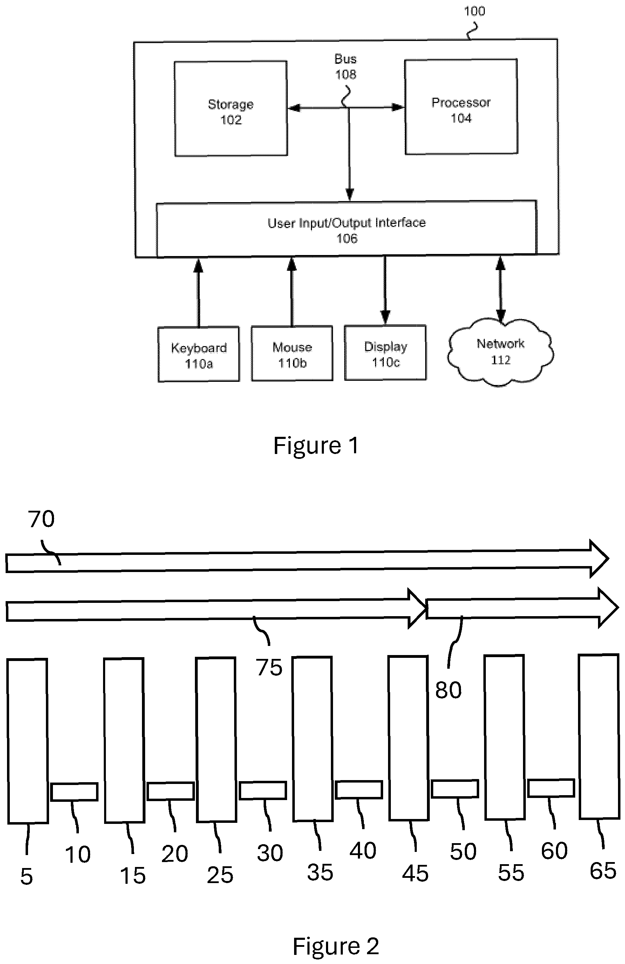

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

Referring to Figure 2, an optical line from an optical line terminal (OLT) 5 to an optical network termination (ONT) 65 is shown. In order from the OLT 5, the optical path comprises a spine fibre cable 10, an aggregation node 15, a further spine fibre cable 20, a splitter node 25, a 36f cable 30, an intermediate joint 35, an SST tail 40, a connectorized block terminal 45, a connectorized drop cable 50, a customer splice point 55, and an internal fibre cable 60 (which connected to the ONT 65). This represents one optical line, but in practice the optical line will branch, particularly at the splitter node 25 for example. In other words, a section of the optical path will be common to multiple optical paths to different customer premises (for example). In an example, a total optical power level, representing a system power limit, may be required to be better than -27dBm (from the OLT 5 to the ONT 65). Within this, an expected attenuation of better than 1dB may be assumed between the connectorized block terminal 45 and the ONT 65, whereas a variable expected power level may apply at the splitter node 25 or connectorized block terminal 45 from the OLT 5. The present technique seeks to estimate a more realistic optical attenuation value for at least a portion of the optical line, as will be discussed below.

The present technology introduces a method to calculate an Expected Power Level (EPL) for an optical distribution network (ODN), which enables a comparison between a measured optical received power level to that of a calculated (expected) power level which is defined from several components.

The EPL calculation may be used to indicate whether the network is performing optimally and provides a comparator to inform whether improvements could be made to lower the ODN loss and increase the power level being received.

At FTTP provision and installs, the ONT received power needs to be higher than the GPON standard of -27dBm to be a pass (-26dBm at the CBT). However such standard/generic build and provision optical power 'targets' at the CBT allows for poor build quality, because:
current -26dBm power limit at the CBT does not account for the length of the optical path (PON); and
generic power level limit allows high loss events (poor splicing, dirty ports/connectors) to remain undetected at build and to subsequently pass commissioning.

Once in-life, high loss events (which may be detected using proactive data (ranging, RX loss)) have the potential to cause a poor service performance, reduce longevity of service, increase the meantime between repair, require multiple network interventions and a higher propensity of future failure.

To overcome these challenges, this technique introduces a network quality indicator Expected Power Level (EPL) which is calculated between two points of an Optical Network and used in multiple functions to improve network provision quality and service assurance. The EPL is used as:
maximum target level at an optical line new provision (e.g. FTTP); and
indicator of network quality for in-life maintenance functions such as fault diagnostics, service assurance, and capacity planning.

The EPL is calculated by adding the following elements:
(A) Launch power level at the Optical Line terminal (OLT);
(B) Attenuation from intervening Optical Distribution Network (ODN) elements dependent on network architecture and on the optical path ranging length;
(C) Power level variance allowance.

The EPL is a figure calculated in decibel milliwatts (dBmW) with above elements (A), (B) and (C) from 2 types of components: a) constant attenuation and b) variable attenuation of the passive network components.

Constant loss components arise from all the passive components in an optical network which have a defined attenuation (dB). These defined values are applied depending on the network architecture (e.g. 1x Optical splitter introduces 1 attenuation value and if the architecture includes 2x Optical splitters then these introduce double that attenuation value).

Variable loss components arise from the optical path length, e.g. dB/Km.

As mentioned, EPL is given by the sum of (A), (B) and (C) above.

Considering (B) (intervening optical elements and optical path ranging length), the attenuation in the intervening Optical Distribution Network (ODN) is contributed to by components including, but not limited to:
Constant loss components for the physical network components:
Headend L2S optical port connector.
Wavelength division multiplexor (WDM) device.
Passive optical splitter device.
Connectorised block terminal device.
Drop cable connector.
Internal connector.
Number of fibre splices.

Variable attenuation components arise from the optical path length, e.g. dB/Km. This attenuation depends upon the length of the optical network from the launch terminal device (OLT) which can either be taken from an inventory record, or can be based on a reported (actual) ranging length (for example measured via a test system) in a FTTP passive optical network.

Considering (C), a Power level allowance for measurement variation (e.g. percentage), can be calculated for example by comparing historical data/empirical data that give accuracy of the calculated EPL compared to the actual power level measurement over a good quality optical path. This power level variance is a variable component and can be expected to be different in future optical networks technology and architecture evolution. The use of a power level variance allowance makes it possible to make the EPL figure more accurate by using real-world experience of an amount of deviation from assumed values which can be expected.

In one implementation, a database is used to store a correspondence between particular components of an optical distribution network, and their respective assumed attenuation. Subsequently, when establishing the expected power level for an optical line, the intervening (and end point) components may be selected from the database, their assumed attenuation obtained, and used to determined the expected power level. The database may change dynamically over time as new components are added, and assumed attenuation defined in the database may be adjusted based on real world experience where appropriate.

In addition, in some cases an allowance may be made for the age of components. In particular, for certain components their performance may degrade with age, with the result that a new component of a particular type may have a certain assumed attenuation, whereas by a notional end of life for the component its assumed attenuation may be higher. Where a component database is used (as described above), this may reflect assumed attenuation for both new and end of life components, and optionally at other ages in between.

The EPL may be used in a variety of different ways, for example:

### Test on provision

If the power level measured at the ONT is much lower than the EPL (calculated between OLT and CBT) then this indicates that there are connection or splice issues in the optical circuit between CBT and ONT that need rectifying.

In particular, if the measured power level at ONT or close to ONT is much lower ('close' and 'much lower' could be accounted for by thresholds)
e.g. EPL = -15dBm at CBT and
measured power at ONT is -19dBm
then this may indicate that there are additional high loss events in the optical circuit between CBT and ONT reducing the level of the power received (weaker signal).

If the measured power level at CBT or close to CBT is much lower ('close' and 'much lower' could be accounted for by thresholds)
e.g. EPL is -15dBm and
measured power at CBT is < -18dBm then there is very likely a high loss event (bend or failing splitter) further into the network that needs investigation and fixing.

### Test on repair:

As the FTTP circuit is already working, the EPL will be available and used to guide the repair back to expected power levels, as in Test on Provision above.

### Baseline:

The EPL for a given optical line (between two points) can be stored as part of a birth certificate/baseline measure of the service, to track in the future how the line has evolved (for example, degraded) and to provide proactive diagnostics (that is, predict when and where future failures might occur).

### Fault location:

Services operating adversely to the EPL can be localised through the assessment of commonality relative to the network components. For example, if all circuits on a splitter node are adverse to EPL then the problem should lie at or prior to that component. In this way, the EPL can be used to help track down where faults are present.

### Service Assurance:

EPL can be used to gauge if the physical network meets the expected requirements as part of any service performance consideration (assessment for quality) through FVR (fault-reduction-volumes) programmes, within the above applications of test on provision, baselining, and fault location.

### Capacity planning:

EPL can used as indicator for capacity planning and network upgrades.

### Digital twins:

EPL can be used as the main indicator for network quality to drive modelling/simulating/what-if analyses in Digital twins of optical networks to perform operations such as proactive maintenance (applications areas above relating to test on repair, baselining, fault location and service assurance) and network planning/upgrades.

The present technique can be used for software defined networks, not just fixed networks.

The proposed method may provide various benefits, such as improving network and provision build quality, increasing longevity of the FTTP network assuming attenuation increases at a particular rate (for at least some components), support future products and higher speeds requiring lower attenuation, exploiting existing engineer tools and testers (no new equipment is required to obtain the EPL), and no increase in build or provision task times.

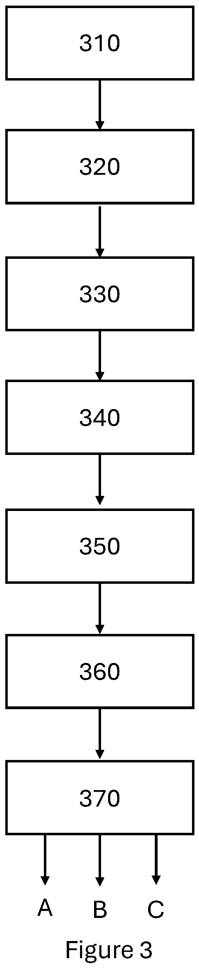

Referring to Figure 3, an example method is shown. At a step 310 an optical path ranging length to the OLT 5 is measured, for example at the ONT 65. At a step 320, all optical components 5 to 65 are identified, for example based on a network schematic, digital twin or other network model. At a step 330, optionally an age of at least some of the optical components 5 to 65 is identified. At a step 340, the ODN component database is accessed, and assumed attenuation obtained for each of the components (based on their age, if optionally utilised). Then, at a step 350, the EPL is estimated based on the obtained attenuation, and the measured ranging length. At a step 360, a power level variance is added. At a step 370, the EPL (or related quality indicator) is output, for example to one or more of applications A, B and C. These applications A, B, C may be any of the applications identified above. In the alternative, the step 370 may be considered a step or process of using the EPL in a specific method. For example, the step 370 may be considered a step of measuring an actual power level for the new optical line and comparing the expected power level indicated by the network quality indicator with the measured power level.

In such a case, the step 370 may also be considered to include determining whether an installed line is providing an acceptable network quality in dependence on the comparison, wherein the installed line is determined to provide an acceptable network quality when the measured power level is within a threshold range of the expected power level.

Alternatively, the step 370 may comprise defining a baseline performance certificate for the optical line based on the network quality indicator, and storing the baseline performance certificate for subsequent use.

Alternatively, the step 370 may comprise diagnosing a fault on the optical line based on a comparison between the EPL and the measured power level. Where a plurality of optical lines are measured in this way, the step 370 may comprise identifying which optical lines are experiencing an actual power level beyond a threshold difference from the expected power level, and localising a fault by determining components common to the identified optical lines.

Alternatively, the step 370 may comprise modelling an optical distribution network using a digital twin, comprising modelling the attenuation of optical components within the network using the network quality indicator obtained using the method above.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of determining a network quality indicator for an optical distribution network, comprising:
estimating an expected power level between two points of the optical distribution network, the expected power level being estimated based on respective assumed attenuation associated with intervening optical components between the two points, on an optical path ranging length, and on a power level variance allowance.

2. A method as claimed in claim 1, wherein the one of the two points is an optical network termination device disposed and the other of the two points is an optical line terminal.

3. A method as claimed in claim 2, wherein the optical path ranging length between the optical line terminal and the optical network termination device is determined and reported by the optical network termination device.

4. A method according to claim 2, wherein the expected power level is further based on an assumed launch power level at the optical line terminal.

5. A method as claimed in any preceding claim, wherein the power level variance allowance is a percentage allowance added to the assumed power level.

6. A method as claimed in any preceding claim, wherein the power level variance allowance is applied as a fixed percentage.

7. A method as claimed in any preceding claim, wherein the assumed attenuation for at least some of the intervening components are age dependent.

8. A method as claimed in any preceding claim, comprising maintaining a database of assumed attenuation of optical components, and accessing the database to obtain the assumed attenuation of optical components determined to intervene on the optical distribution network.

9. A method of testing an optical line, comprising:
determining the network quality indicator for the optical line using a method according to any preceding claim;
measuring an actual power level for the new optical line; and
comparing the expected power level indicated by the network quality indicator with the measured power level.

10. A method of installing a new optical line, comprising:
testing the new optical line using the method of claim 7; and
determining whether the installed line is providing an acceptable network quality in dependence on the comparison, wherein the installed line is determined to provide an acceptable network quality when the measured power level is within a threshold range of the expected power level.

11. A method according to claim 10, comprising defining a baseline performance certificate for the optical line based on the network quality indicator, and storing the baseline performance certificate.

12. A method of maintaining an optical line, comprising:
testing the new optical line using the method of claim 9; and
diagnosing a fault on the optical line based on the comparison.

13. A method of detecting faults on an optical distribution network, comprising:
testing a plurality of optical lines using the method of claim 9;
identifying which optical lines are experiencing an actual power level beyond a threshold difference from the expected power level; and
localising a fault by determining components common to the identified optical lines.

14. A method of modelling an optical distribution network using a digital twin, comprising modelling the attenuation of optical components within the network using the network quality indicator obtained using the method of any one of claims 1 to 8.

15. A system for determining a network quality indicator for an optical line between two points on an optical distribution network, comprising:
an apparatus for measuring an optical path ranging length for the optical line; and
an apparatus for estimating an expected power level between the two points of the optical distribution network based on respective assumed attenuation associated with intervening optical components between the two points, on the measured optical path ranging length, and on a power level variance allowance.

16. A computer system including a processor and memory storing computer program code for performing the steps of the method of any of claims 1 to 14.

17. A computer program element comprising computer program code to, when loaded into a computer system and executed thereon, cause the computer to perform the steps of a method as claimed in any of claims 1 to 14.
